# EUROPEAN PATENT APPLICATION

(11) **EP 0 615 309 A1**
(43) Date of publication of application: **14.09.1994**
(21) Application number: 94103791.3
(22) Date of filing: 11.03.1994
(51) Int. Cl.: H01R 4/70, H02G 15/113

(54) **Bus connection**

(30) Priority: 11.03.1993 JP 77761/93; 11.03.1993 JP 77762/93; 11.03.1993 JP 77763/93
(71) Applicant: KABUSHIKI KAISHA TOSHIBA, Kawasaki-shi, Kanagawa-ken 210 (JP); SHOWA ELECTRIC WIRE AND CABLE CO.,LTD, Kawasaki-shi, Kanagawa (JP)
(72) Inventor: Sato, Kenichi, c/o Kabushiki Kaisha Toshiba, Fuchu-shi, Tokyo-to (JP); Kinoshita, Susumu, c/o Kabushiki Kaisha Toshiba, Fuchu-shi, Tokyo-to (JP); Yoshida, Tetsuo, c/o Kabushiki Kaisha Toshiba, Fuchu-shi, Tokyo-to (JP); Nonoshita, Tadashi, c/o Kabushiki Kaisha Toshiba, Fuchu-shi, Tokyo-to (JP); Masaki, Nobuo, c/o Kabushiki Kaisha Toshiba, Fuchu-shi, Tokyo-to (JP); Miyagawa, Masaru, c/o Kabushiki Kaisha Toshiba, Fuchu-shi, Tokyo-to (JP); Sonobe, Hiroshi, Kabushiki Kaisha Toshiba, Mie-gun, Mie-ken (JP); Kojima, Ryoichi, Showa Elec.Wire & Cable, Co.,Ltd., Kawasaki-shi, Kanagawa-ken (JP); Kase, Tadashi, Showa Elec.Wire & Cable, Co.,Ltd., Kawasaki-shi, Kanagawa-ken (JP); Hasegawa, Naoya, Showa Elec.Wire & Cable, Co.,Ltd., Kawasaki-shi, Kanagawa-ken (JP)
(74) Representative: Weisert, Annekäte, Dipl.-Ing. Dr.-Ing.

(57) **Abstract**

A bushing constituting a bus connection is divided to be assembled and when the divided bushing is assembled, a receiving portion for accommodating a coupling for buses is formed within the bushing. Accordingly, the coupling for buses is disposed in a position in which the receiving portion is to be formed in the divided state of the bushing and the bushing is then assembled to thereby obtain the bus connection having the coupling for buses accommodated in the receiving portion.

## Description

### FIELD OF THE INVENTION

The present invention relates to a bus connection suitable for a T-connection for connecting buses between panel boards.

### BACKGROUND OF THE INVENTION

A combined structure of a T-type bushing and cable-like buses is widely adopted as, for example, a T-type connection for connecting a cable to an equipment such as a GIS, a bus connection for a cubicle; a lead-in and lead-out cable connection and the like because of the economical efficiency, compactness and the convenience for handling.

Fig. 13 is a perspective view illustrating a conventional bus connection of this type.

In Fig. 13, the bus connection 1 includes a bushing 2 made of epoxy resins and a coupling 5 disposed within the bushing 2 and for connecting conductors of cable-like buses 3 by means of a sleeve-like internal electrode. A drawing-out rod 6 is connected to the coupling 5 to be electrically connected to an internal circuit of an equipment.

When a plurality of bus connections having the above structure are put side by side and are connected to each other by means of buses, the following connecting method has been adopted heretofore.

Fig. 14 illustrates the conventional bus connecting method.

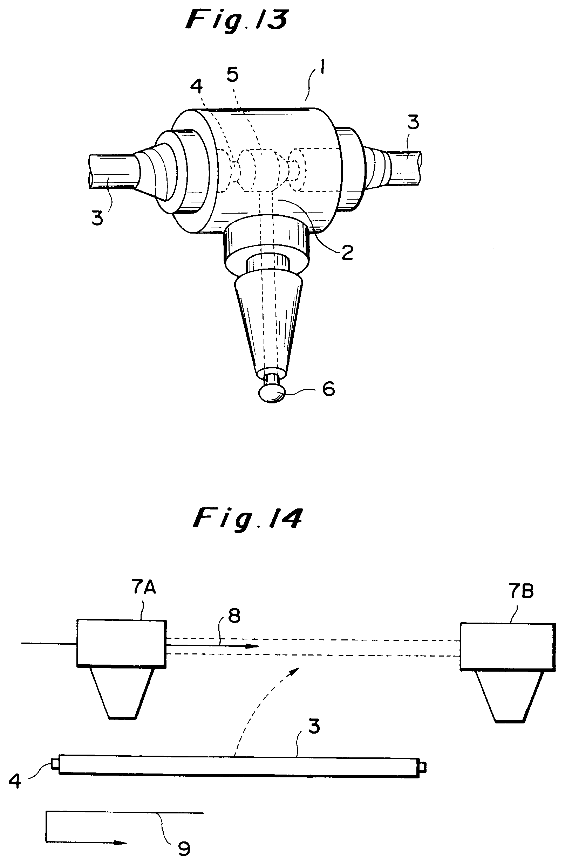

As illustrated in Fig. 14, two bus connections 7A and 7B are disposed with a predetermined space and electrically connected to each other by means of a bus 3. More particularly, the bus 3 is subjected to the terminal treatment that a conductor 4 within the bus 3 is exposed at both ends thereof. The bus 3 is inserted into one bus connection 7A straight as shown by arrow 8 and both ends of the bus 3 are then inserted into both of the bus connections 7A and 7B.

As another method, for example, one end of the bus 3 is inserted into one bus connection 3 as shown by arrow 9 and the bus 3 is then moved into the opposite direction so that the other end of the bus 3 is inserted into the other bus connection 7B.

Both of the above methods are adopted since the rigidity of the bus 3 is high and the bus 3 can not be bent easily.

In the conventional connecting method described above, however, since it is necessary to insert the bus 3 into the bus connection, much labor and time are required for the connecting work and the connection order among the bus connections must be considered previously, so that the connecting work is troublesome. For example, when three or more bus connections are arranged lengthwise and the bus connections are connected to each other successively by means of buses 3, it is difficult to start the insertion work of the bus from any position. Further, when it is necessary to disjoint a bus connection after completion of the connecting work, a bus connected to the bus connection is required to be removed and accordingly the bus connections at both sides of the bus must be disjointed at the same time.

On the other hand, when many buses are to be connected, there is a problem as follows.

Fig. 15 is a plan view showing an inter-board connecting apparatus using many buses.

As shown in Fig. 15, when many buses are electrically connected between an A board 10A and a B board 10B of an equipment, many buses 3 are provided in parallel at the conventional bus connections.

In this example, bushings 2 for U-, V- and W-phases are connected through three buses 3 for each phase.

In the inter-board connection described above, the buses 3 for respective phases are approached to each other to further complicate the assembling work of the bushings 2. For example, it is difficult to ensure sufficient work space for the inspection and repair for a portion thereof.

### SUMMARY OF THE INVENTION

It is an object of the present invention to provide a bus connection capable of performing connecting work using buses easily with good work efficiency and being disjointed in itself.

It is another object of the present invention to provide a bus connection capable of performing connecting work easily with good work efficiency even when many buses are provided and being provided in small space.

The bus connection according to a first aspect of the present invention comprises a coupling for connecting a pair of buses to each other and has a dividable structure capable of assembling a bushing. When the bushing is assembled, a receiving portion for accommodating the coupling is formed within the bushing.

According to the first aspect of the present invention, the coupling for the buses is moved to the disposition position of the bus connection after the coupling for the buses is formed or the coupling for the buses is formed in the disposition position of the bus connection and the coupling is disposed within the bushing to be accommodated in the receiving portion so that the bushing can be assembled to thereby connect the buses to each other. Accordingly, the connecting work of the buses can be performed simply with good work efficiency and be performed from any position. Furthermore, only the bus connection can be disjointed if necessary to thereby perform maintenance, management and recovery of trouble.

The bus connection according to a second aspect of the present invention comprises the divided piece formed by dividing the bushing along the division plane in the longitudinal direction of the bus. The divided piece is fitted into the bushing along the division plane by means of a guide portion to form the receiving portion for the coupling of the bus within the bushing and the divided piece is fixed in a correct position within the bushing by means of a stopper.

According to the second aspect of the present invention, the coupling is disposed in the bushing and the divided piece is inserted to be fitted into the bushing while being guided by the guide portion and is fixed by a stopper to thereby connect the buses to each other. Accordingly, the connecting work of the buses can be performed simply with good work efficiency. Further, the connecting work can be performed from any position. Only the bus connection may be disjointed if necessary.

Furthermore, the bus connection according to a third aspect of the present invention comprises a plurality of couplings for connecting many pairs of buses to each other. The bushing is formed of a plurality of divided pieces capable of being assembled. The divided pieces are assembled to thereby form a plurality of receiving portions for accommodating the couplings within the bushing.

According to the third aspect of the present invention, the couplings of the plurality of buses can be accommodated in the receiving portions, respectively, and the divided pieces can be then assembled to thereby connect the plurality of buses in one bushing collectively. Accordingly, the connecting work of many buses can be performed simply with good work efficiency. Since a multiplicity of buses can be provided in small space, the work space required for the inspection and repair can be ensured sufficiently.

### BRIEF DESCRIPTION OF THE DRAWINGS

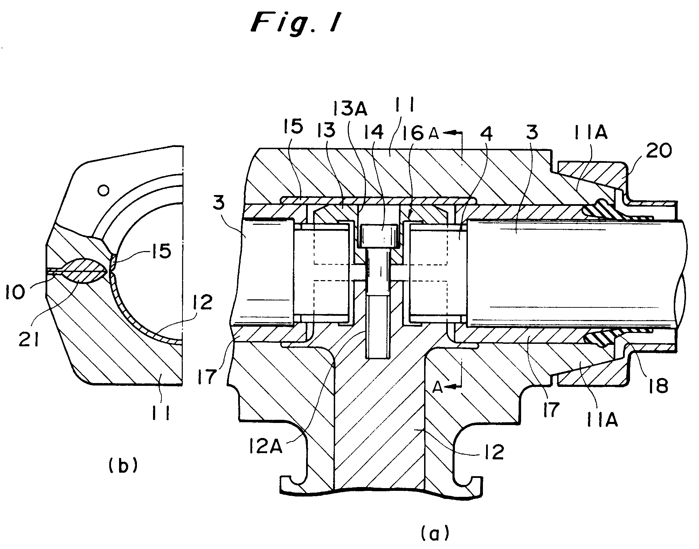

Fig. 1 illustrates an embodiment of a bus connection according to the present invention with Fig. 1(a) being a longitudinal sectional view thereof and Fig. 1(b) being a longitudinal sectional view of a portion taken along line A-A of Fig. 1(a);

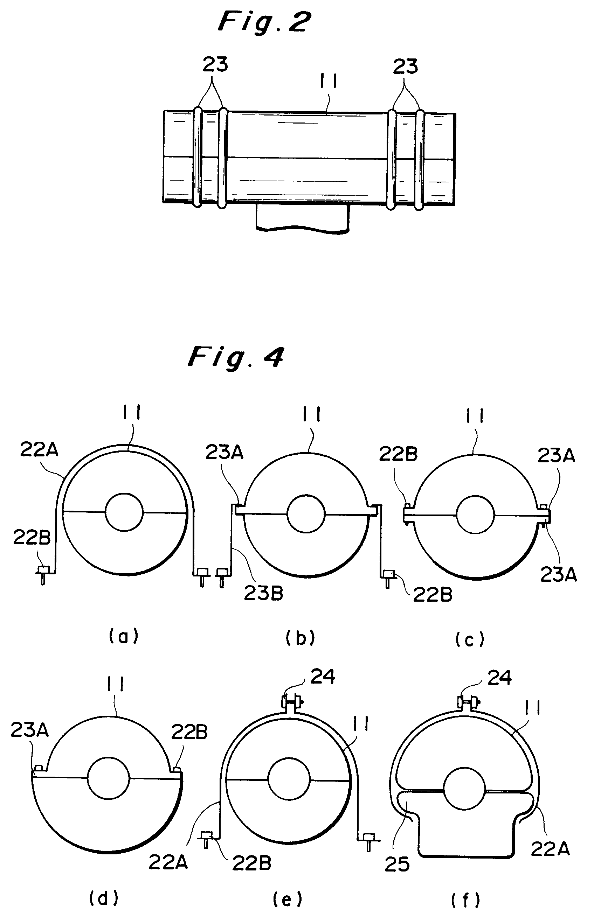

Fig. 2 is a diagram for explaining operation and effect of fixing rings according to the present invention;

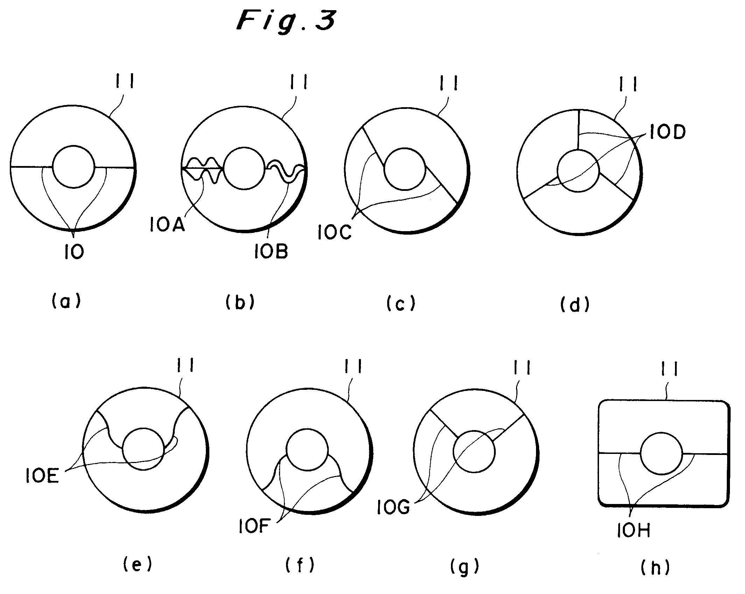

Fig. 3 illustrates end surfaces of various embodiments for a method of dividing a bushing of a bus connection according to the present invention;

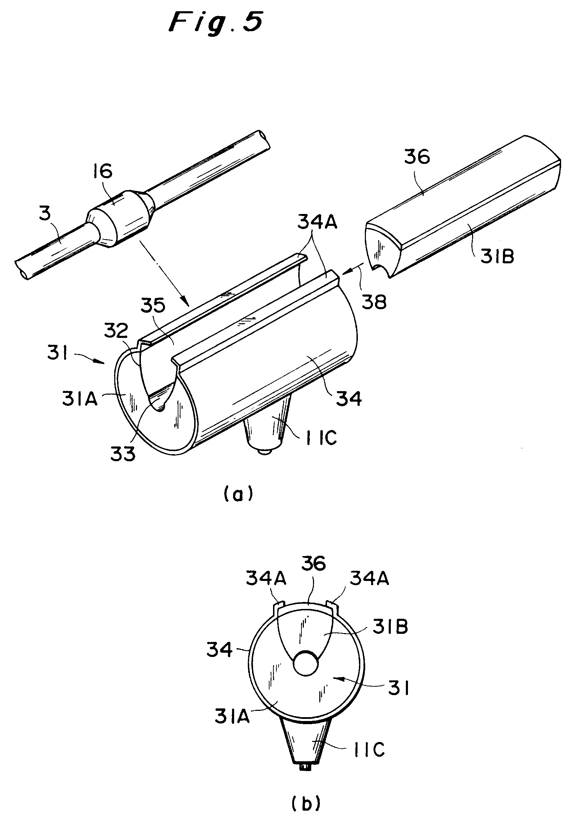

Fig. 4 illustrates end surfaces of various embodiments of fixing members for fixing a bushing according to the present invention;
Fig. 5 illustrates another embodiment of a bus connection according to the present invention with Fig. 5(a) being an exploded perspective view and Fig. 5(b) being an end elevation;

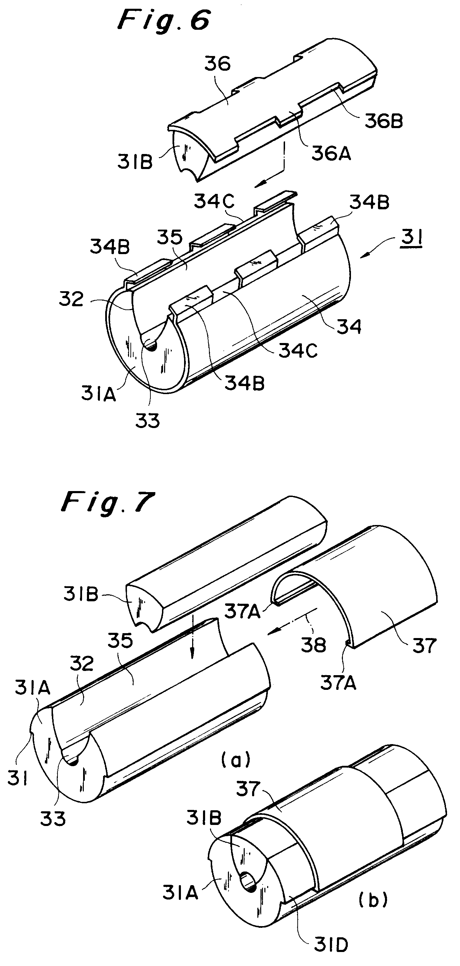

Fig. 6 is an exploded perspective view illustrating another embodiment of a bus connection according to the present invention;
Fig. 7 illustrates still another embodiment according to the present invention with Fig. 7(a) being an exploded perspective view of a bus connection and Fig. 7(b) being a perspective view of the assembled bus connection;

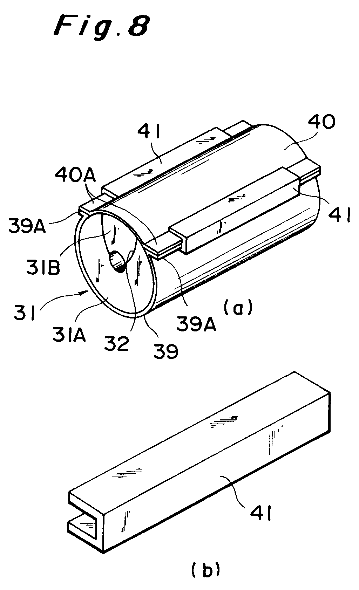

Fig. 8 illustrates still another embodiment according to the present invention with Fig. 8(a) being a perspective view of a bus connection and Fig. 8(b) being a perspective view of a stopper;

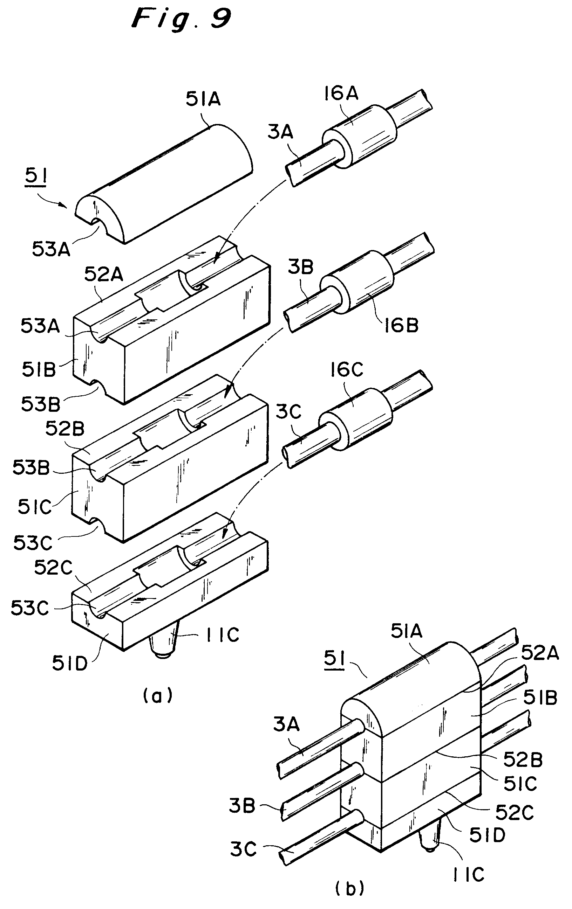

Fig. 9 illustrates an embodiment of a bus connection for multiple buses according to the present invention with Fig. 9(a) being an exploded perspective view and Fig. 9(b) being a perspective view of the assembled bus connection;

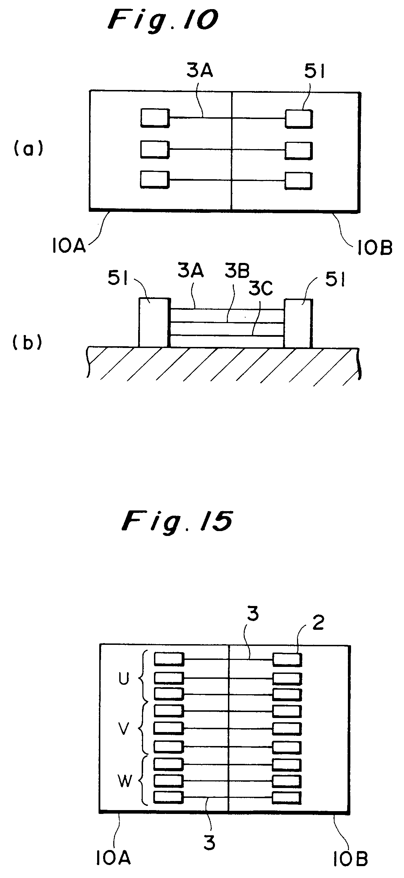

Fig. 10 illustrates a board in which many buses are provided by using the bus connections of the embodiment shown in Fig. 9 with Fig. 10(a) being a plan view and Fig. 10(b) being a side view;

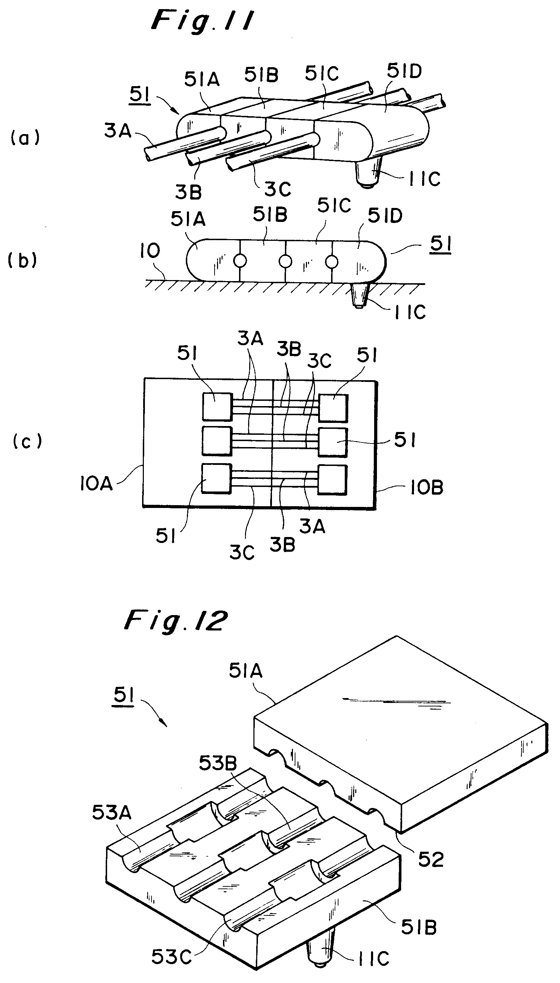

Fig. 11 illustrates a modification of a bus connection for multiple buses according to the present invention with Fig. 11(a) being a perspective view, Fig. 11(b) being a side view and Fig. 11(c) being a plan view in which many buses are provided between boards by using the modification;
Fig. 12 is an exploded perspective view illustrating another modification of a bus connection for multiple buses according to the present invention;
Fig. 13 is a perspective view of a conventional bus connection;
Fig. 14 is a diagram for explaining an assembling method of the conventional bus connection; and
Fig. 15 is a plan view illustrating many buses connected between boards by using the conventional bus connections.

### DESCRIPTION OF THE PREFERRED EMBODIMENTS

The present invention is now described in detail with reference to embodiments illustrated in the accompanying drawings.

Fig. 1 illustrates an embodiment of a bus connection according to the present invention in which Fig. 1(a) is a longitudinal sectional view of the bus connection and Fig. 1(b) is a sectional view of a portion taken along line A-A of Fig. 1(a).

The bus connection shown in Fig. 1 serves to electrically connect a pair of right and left buses 3 to each other. A coupling 16 for buses disposed within the bus connection is enclosed by a bushing 11. The bushing 11 is divided into two portions along a division plane 10 shown in Fig. 1(b) in a longitudinal direction of the buses 3.

The bus 3 is formed into a cable and a conductor 4 is exposed from an end thereof. The conductor 4 is engaged with or abuts against an internal electrode 12 within the bushing 11 and is electrically connected to the electrode 12. In the embodiment, a lower half peripheral portion of the conductor 4 is brought into electrical contact with an upper end of the internal electrode 12 and a half-divided sleeve 13 is into contact with an upper half peripheral portion of the conductor 4. The half-divided sleeve 13 is provided with a bolt insertion hole 13A and a bolt 14 inserted into the hole 13A is screwed into the bolt engagement hole 12A of the internal electrode 12. Thus, the conductors 4 are held by the half-divided sleeve 13 and the internal electrode 12 to electrically connect the conductors 4 to each other. A guard electrode 15 is provided within an upper half-divided portion of the bushing 11 for the electrical protection.

An insulating spacer 17 is fitted onto the end of the bus 3 so as to embed a gap formed between the end of the bus and the bushing 11. The insulating spacer 17 is made of insulating rubber. A seal portion 18 is provided between an end of the insulating spacer 17 and the peripheral surface of the bus 3 in order to retain the air-tight characteristic and the seal portion 18 is fitted onto the bus 3 to hold an outer cover of the bus 3 strongly.

Formed at both ends of the bushing 11 are conical portions 11A which are also divided along the division plane 10. A fixing ring 20 is fitted onto the divided conical portion 11A.

Further, a resilient insulating member such as, for example, insulating rubber 21 is held in the division plane 10 of the two-divided bushing 11 as shown in Fig. 1(b). The insulating rubber 21 is provided to exert a fixed pressure or more on the divided bushing at the division plane 10 to thereby enhance the close contact and ensure the electrical insulation when the bushing 11 is assembled as shown in Fig. 1(b). Adoption of such a structure makes it possible to divide the bushing 11. The coupling 16 of the buses 3, 3 is composed of the conductors 4, 4, the internal electrode 12, the half-divided sleeve 13 and the bolt 14.

In the bus connection of the present invention as structured above, when the buses 3 are electrically connected to each other by means of the bus connection, the upper half portion of the bushing 11 and the half-divided sleeve 13 are removed previously. Thus, the conductors 4 of the buses 3 can be set in a predetermined upper end positions of the internal electrode 12 immediately by moving the buses in parallel from upper without longitudinal movement of the buses 3. Thereafter, the half-divided sleeve 13 is fixed by means of the bolt 14 while holding the conductors 4, 4 between the internal electrode 12 and the half-divided sleeve 13 and the upper half portion of the bushing 11 is then mounted on the lower half portion of the bushing 11 integrally to thereby complete the connecting work. Thus, such a connecting work can be simplified sufficiently and improves the work efficiency as compared with the conventional method.

Fig. 2 is a side view of the bushing for explaining the operation and effect of the fixing ring 20 shown in Fig. 1.

The bushing 11 shown in Fig. 2 is divided into two upper and lower portions which are integrally mounted by means of bands 23 simply. However, when such bands 23 are used, the division planes of the bushing 11 can not be necessarily aligned with each other exactly.

Accordingly, in the embodiment of the present invention shown in Fig. 1, the conical portions 11A are provided at both the ends of the bushing 11 and the fixing rings 20 fitted onto the conical portions are also provided. Thus, the upper and lower divided portions of the bushing 11 are aligned with each other exactly and fixed integrally. Accordingly, when the fixing rings 20 are used, any positioning and fixing means such as, for example, bolts or others for integrally mounting the bushing 11 can be omitted.

The bushing 11 may be divided into two or more portions and various other modifications can be considered.

Fig. 3 illustrates various embodiments of the method of dividing the bushing of the bus connection of the present invention.

As shown in Fig. 3(a), for example, the bushing 11 is simply divided into two portions in the same manner as the above embodiment and a plate-like insulating rubber is held in the division plane 10.

Further, as shown in Fig. 3(b), the bushing 11 is divided into two upper and lower portions and division planes 10A and 10B thereof are formed to be undulated and the insulating rubber is held between the division planes 10A and 10B in the same manner. In an example of Fig. 3(c), the division planes 10C of the bushing 11 are formed in a plane that does not pass through a central axis of the bus. In this case, the insulating rubber is also held between the division planes. In an example of Fig. 3(d), the bushing is divided into three portions by three division planes 10D. Specifically, in the case of a large bushing, the bushing is desirably divided by two or more division planes.

In an embodiment of Fig. 3(e), two-divided bushing 11 is shown and the division planes 10E thereof are curved slightly parabolically. With such a divided form, an upper portion of the bushing 11 can be opened to accommodate buses into the bushing 11 while moving coupled portions of the buses in parallel from upper into the bushing. In the case of Fig. 3(f), similarly, the bushing is divided upside down with respect to the embodiment of Fig. 3(e). In the case of the bushing 11 of Fig. 3(f), when the upper half portion is removed, a portion for accommodating the coupling of the buses is opened widely. Accordingly, with such a structure, the coupling of the buses does not use the half-divided sleeve as shown in Fig. 1 and can adopt a connection using a compression sleeve.

An embodiment of Fig. 3(g) shows a bushing 11 having division planes 10G formed to be just fan-shaped in section. Operation thereof is the same as that of Figs. 3(e) and (f).

In the above embodiments, the sections of the bushings 11 are all circular, while the section of the bushing 11 may be rectangular as shown in Fig. 3(h). Division planes 10H of the bushing 11 of the embodiment is straight, while the division planes may be curved or inclined properly as shown in Figs. 3(a) to (g).

Fig. 4 illustrates an embodiment of a fixing member for integrally fixing the divided bushing. Figs. 4(a) to (f) illustrate fixing members as viewed from an end surface side thereof.

In an embodiment of Fig. 4(a), the bushing 11 is divided into two portions in the same manner as shown in Fig. 3(a). In this case, a belt-shaped saddle 22A is used to integrally fixing the upper and lower divided bushings 11, and both ends of the saddle 22A are fixedly mounted to a base not shown by bolts 22B. By screwing the bolts 22B, pressure is added to the division planes of the bushing 11 so that the resilient insulating member is held between the division planes as described above.

In Fig. 4(b), ribs 23A are formed on both sides of the upper half portion of the bushing 11. The ribs 23A are held by hook-shaped fixing members 23B and fastened by bolts 22B.

In an embodiment shown in Fig. 4(c), ribs 23A are formed on both sides in the vicinity of the upper and lower divided planes of the bushing 11. Bolts 22B penetrate the upper and lower ribs 23A, 23A and the upper and lower divided portions of the bushing are integrally fixed by screwing the bolts.

In an embodiment of Fig. 4(d), ribs 23A are formed on both sides of the upper half portion of the bushing 11 and the lower half portion of the bushing 11 is formed to have a larger radius than that of the upper half portion. Thus, bolts 22B penetrating the ribs 23A of the upper half portion of the bushing 11 are screwed into upper side surfaces of the lower half portion of the bushing 11 so that the bushing 11 is integrally assembled.

In an embodiment of Fig. 4(e), the saddle 22A shown in the embodiment of Fig. 4(a) is divided into two portions and the half-divided portions of the saddle 22A are fastened by a bolt 24 to increase the fastening force of the bushing 11. Accordingly, it is not necessary to adjust the fastening force of the bolts 22B.

In an embodiment of Fig. 4(f), the lower half portion of the bushing 11 is formed into a rectangle and ribs 25 are formed at upper portions thereof. The saddle 22A is formed into a C-letter and is divided into two portions. A bolt 24 fastens the two-divided saddle 22A so that sufficient pressure is added to the division planes of the bushing 11.

With the above-mentioned structure, the bushing can be integrally assembled while proper pressure is added to the resilient insulating member held between the division planes of the divided bushing.

The present invention is not limited to the above embodiments.

In the embodiment of Fig. 1, the T-type bus connection has been described, while the same structure can be applied to, for example, a Y-type or L-type bus connection or a straight type bus connection. The structure of the bus may be the same as the conventional power cable or may be flat in section instead of a circular section. Further, the shape and the length of the internal electrode and the half-divided sleeve and other structures for coupling both of them may be changed freely in a range that the same functions are attained. In addition, the resilient insulating member held between the division planes of the divided bushings is not limited to insulating rubber and may be insulating plastic, for example.

Fig. 5 is a exploded perspective view of a bus connection according to another embodiment of the present invention.

In Fig. 5, a bushing 31 accommodates the coupling 16 of the bus 3 and serves to electrically connect the bus 3 to an equipment. The bushing 31 is mounted on a wall or the like of the equipment.

The bushing 31 is previously divided into a bushing body 31A and a divided piece 31B by a division plane 32 as shown in Fig. 5(a). The division plane 32 is formed by a parallel plane in the longitudinal direction of the bus 3. A middle portion of the bushing body 31A is cut to form a receiving portion 33 in order to accommodate or receive the coupling 16 of the bus 3 integrally with the division plane 32. The coupling 16 of the bus 3 is electrically connected to an internal circuit of the equipment not shown through a bushing 11C on the side of the equipment.

A saddle 34 formed of metal plate is fitted onto an outer peripheral surface of the bushing body 31A. The saddle 34 is formed to be substantially C-shaped and is formed with an opening 35 to open the division plane position of the bushing body 31A. Guide portions 34A, 34A are formed on both sides of the saddle 34.

On the other hand, a belt-shaped stopper 36 is fixedly mounted on an arcuate surface portion of the divided piece 31B. The stopper 36 is selected to have a slightly larger width than that of the opening 35 of the saddle 34.

Accordingly, when the divided piece 31B is slid together with the stopper 36 along the division plane 32 of the bushing body 31 in the direction of arrow 38, the stopper 36 is supported within the guide portions 34A, 34A as shown in Fig. 5(b) and finally the divided piece 31B is integrally fitted into the bushing body 31A in position. In the embodiment, the division plane 32 is formed to be substantially parabolic.

With the divided structure of the bushing 31 as described above, the divided piece 31B is separated from the bushing body 31A of the bushing 31 and the coupling 16 of the bus 3 is dropped from the opening 35 into the receiving portion 33 formed in the bushing 31 for accommodating the coupling of the bus 3. Then, when the divided piece 31B is slidingly fitted into the bushing body 31A along the division plane 32, the assembling of the bushing 31 is completed.

In this manner, the assembling work of the bushing 31 having the divided structure is very simple and the work efficiency thereof is improved greatly.

Fig. 6 is an exploded perspective view illustrating another embodiment of a bus connection according to the present invention.

In the embodiment, the bushing body 31A and the divided piece 31B of the bushing 31 have the same shape as that of Fig. 5. Guide pieces 34B and notches 34C are alternately disposed on both sides of the opening 35 of the saddle 34 fitted onto the bushing body 31A.

On the other hand, extended pieces 36A and notches 36B are alternately formed on both sides of the stopper 36 fixedly mounted on the divided piece 31B.

The opening 35 of the saddle 34 is selected to have an opening width sufficient to allow the divided piece 31B to be fitted into the opening 35.

With the bus connection having the above structure, when the extended pieces 36A of the stopper 36 is aligned with the notches 34C of the saddle 34 and the divided piece 31B is fitted into the bushing body 31A from the opening 35, the coupling 16 can be accommodated in the space of the receiving portion 33 and the bushing 31 can be assembled just by moving the divided piece 31B to a correct position thereof slightly with respect to the busing body 31A.

Fig. 7 is a perspective view illustrating still another embodiment of a bus connection according to the present invention.

Fig. 7(a) is an exploded perspective view of the bus connection and Fig. 7(b) is a perspective view of the bus connection assembled.

In the embodiment, a saddle 37 is formed into a C-letter in section and bent portions 37A, 37A are formed at both ends thereof. Further, the bushing 31 is composed of the bushing body 31A and the divided piece 31B. In the embodiment, the saddle 37 is used as the stopper and is fitted onto the assembled bushing 31.

With the bus connection having the above structure, the coupling 16 of the bus shown in Fig. 5 is accommodated in the space of the receiving portion 33 of the bushing body 31A and the divided piece 31B is set in a correct position of the bushing body 31A through the opening 35. Then, when the saddle 37 is slidingly fitted in the direction of arrow 38, the bent portions 37A, 37A of the saddle 37 are engaged with steps 31D formed in the side of the bushing body 31A and the divided piece 31B can be brought into close contact with the division plane 32 of the bushing 31 exactly to thereby assemble the bushing 31. In this case, the assembling work of the bushing 31 can be made without any tool.

Fig. 8 is a perspective view illustrating a bus connection according to a further embodiment of the present invention.

In the embodiment, ribs 39A, 39A are formed at ends of the saddle 39 surrounding the bushing body 31A along the longitudinal direction of the saddle 39. On the other hand, ribs 40A, 40A are also formed at ends of the saddle 40 fixedly mounted to the divided piece 31B. Thus, when the divided piece 31B is fitted into a correct position of the bushing body 31A, the ribs 39A, 39A are engaged with the other ribs 40A, 40A and accordingly the ribs 39A and 40A are held by U-shaped stoppers 41, 41.

In the embodiment, in the same manner as the embodiment of Fig. 7, the divided piece 31B can be slidingly fitted along the division plane 32 and the stoppers 41, 41 can be slid on the ribs 39A and 40A from the opposite side thereof to thereby attain the assembling work of the bushing 31 simply with good work efficiency.

In the embodiments of Figs. 5 to 8, in order to enhance the insulation performance of the bushing 31, a proper insulating member such as rubber may be held between the bushing body 31A and the divided piece 31B. Further, the stopper and the saddle are not required to be provided over the whole length of the bushing in the longitudinal direction and may be provided only over a portion thereof.

Fig. 9 is a perspective view illustrating a still further embodiment of a bus connection according to the present invention, in which Fig 9(a) is an exploded perspective view of the bus connection and Fig. 9(b) is a perspective view of the bus connection assembled.

The bus connection is configured to connect many buses collectively and is provided with a bushing 51. The bushing 51 is divided into four portions by horizontal division planes 52A, 52B and 52C and includes divided pieces 51A, 51B, 51C and 51D. The divided piece 51A disposed in the uppermost portion is formed in a semi-circle in section and other divided pieces 51B, 51C and 51D are formed into a rectangle in section. A receiving portions 53A for accommodating a coupling 16A of a bus 3A are formed in a lower surface of the divided piece 51A and an upper surface of the divided piece 51B (division plane 52A) by the cutting work. A receiving portions 53B for accommodating a coupling 16B of a bus 3B are similarly formed in a lower surface of the divided piece 51B and an upper surface of the divided piece 51C (division plane 52B). Further, a receiving portion 53C for accommodating a coupling 16C of a bus 3C are similarly formed in a lower surface of the divided piece 51C and an upper surface of the divided piece 51D (division plane 52C). A cylindrical bushing 11C is protruded from a lower surface of the divided piece 51D.

With the bus connection thus structured, when the couplings 16A, 16B and 16C of the buses 3A, 3B and 3C are accommodated in the receiving portions 53A, 53B and 53C of the divided pieces 51B, 51C and 51D, respectively, and the divided pieces 51A to 51D are put on another vertically, the bushing with many buses 3A to 3B connected collectively can be assembled. Accordingly, since the couplings 16A to 16C of the buses can be previously electrically connected or can be connected at the disposition location of the bushing 51, the connecting work can be made simply with good work efficiency without considering the connection order of the buses even for many buses.

In the embodiment, it is desirable that resilient insulating members such as rubber are held in the division planes 52A to 52C when the divided pieces 51A to 51D are put on another.

Figs. 10(a) and (b) are a plan view and a side view of a board in which many buses are provided by using the bus connections of the embodiment shown in Fig. 9, respectively. As apparent from Figs. 10(a), (b), one bus connection of the present invention can connect three buses 3A to 3C for one phase put on another vertically and accordingly three bushings 51 may be provided in each of the A board 10A and the B board 10B. Thus, even when many buses are provided, the space therefor can be reduced greatly.

When the number of buses required for one phase is increased or decreased, divided pieces having the same structure as that of the divided piece 51B or the like are increased or decreased to assemble the bushing 51.

Fig. 11 illustrates a modification of a bus connection for multiple buses. The bus connection includes a bushing 51 formed into a substantially elliptic shape as shown in Figs. 11(a) and (b). The bushing is divided into four portions vertically and includes divided pieces 51A, 51B, 51C and 51D. A receiving portion is similarly formed in each of division plane positions of the divided pieces 51A to 51D. Couplings (not shown) of the buses 3A to 3C are accommodated in the receiving portions and the divided portions 51A to 51D are combined to assemble the bushing 51.

The bus connection has sufficient horizontal space and even when there is less vertical space, many buses can be provided. Further, since the divided pieces 51A to 51D are combined to connect three buses by one bushing 51, the horizontal space in the boards 10A and 10B is reduced as shown in Fig. 11(c) as compared with the conventional single bushing provided for one bus.

Fig. 12 is a perspective view illustrating a modification of a bus connection for multiple buses. A bushing 51 of the bus connection is formed into a box and divided into two divided pieces 51A and 51B. Receiving portions 53A, 53B and 53C for accommodating the couplings of the buses are formed in parallel in opposite surfaces (division planes) 52 of the divided pieces 51A and 51B.

The bus connection can accommodate the couplings (not shown) of three buses in the receiving portions 53A to 53C and the bushing 51 can be assembled by putting the divided piece 51A on the divided piece 51B.

The number of division of the bushing 51 in the embodiments shown in Figs. 9 to 12 may be changed freely in accordance with the number of phases of the buses to be connected and belt-shaped or band-shaped structure or bolts and nuts may be used to integrally fix the divided bushings. Further, the division plane may be straight or curved. The number of division planes is not required to be equal to the number of buses to be connected and for example receiving portions for a plurality of buses may be formed in one division plane.

## Claims

1. A bus connection including a coupling for connecting a pair of buses to each other, comprising a bushing capable of being divided along a longitudinal direction of said buses, and a receiving portion formed in said bushing for accommodating said coupling when said bushing is assembled.

2. A bus connection according to Claim 1, wherein said coupling comprises an internal electrode engaged with conductors of said buses to be electrically connected to said conductors, and a half-divided sleeve which holds said conductors together with said internal electrode to couple said conductors to each other.

3. A bus connection according to Claim 1 or 2, wherein said bushing comprises conical portions formed in end portions including division planes, and fixing rings fitted onto said divided conical portions to assemble said bushing.

4. A bus connection according to Claim 1, comprising resilient insulating members held between said division planes of said assembled bushing, and fixing members for integrally fixing said assembled bushing while pressuring said assembled bushing.

5. A bus connection including a coupling for connecting a pair of buses to each other, comprising a bushing including a divided piece divided along a division plane in a longitudinal direction of said buses, a guide portion for inserting and fitting said divided piece into said bushing along said division plane, a stopper for fixedly positioning said inserted divided piece in a correct position within said bushing, and a receiving portion formed by fixing said divided piece within said bushing for accommodating said coupling.

6. A bus connection including a plurality of couplings for connecting many pairs of buses to each other, comprising a bushing formed by a plurality of divided pieces capable of being assembled to each other, and a plurality of receiving portions formed within said bushing by assembling said plurality of divided pieces for accommodating said couplings.

7. A bus connection according to Claim 6, wherein said receiving portions are formed in division planes for dividing said bushing into said plurality of divided pieces.
